# EUROPÄISCHE PATENTSCHRIFT

(11) **EP 2 619 898 B1**
(45) Veröffentlichungstag und Bekanntmachung des Hinweises auf die Patenterteilung: **24.06.2015**
(21) Anmeldenummer: 10782249.6
(22) Anmeldetag: 17.11.2010
(51) Int. Cl.: H02P 3/22, H02P 3/24

(54) **SCHALTGERÄT SOWIE VERFAHREN ZUM BEENDEN EINES ABBREMSVORGANGS EINES DREIPHASIGEN DREHSTROMMOTORS**
SWITCHING DEVICE AND METHOD FOR TERMINATING A BRAKING PROCESS OF A THREE-PHASE AC MOTOR
APPAREIL DE CONNEXION ET PROCÉDÉ POUR TERMINER UN PROCESSUS DE FREINAGE D'UN MOTEUR À COURANT ALTERNATIF TRIPHASÉ

(43) Veröffentlichungstag der Anmeldung: 31.07.2013
(73) Patentinhaber: Siemens Aktiengesellschaft, 80333 München (DE)
(72) Erfinder: HERTZ, Dirk, 92260 Fichtenhof (DE); SEITZ, Johann, 92224 Amberg (DE); ZITZLER, Stefan, 92421 Schwandorf (DE)
(86) Internationale Anmeldenummer: PCT/EP2010/067660
(87) Internationale Veröffentlichungsnummer: WO 2012/065637

(56) Entgegenhaltungen:
- DE-A1- 2 855 330
- DE-A1- 3 816 449
- US-A- 4 741 415

## Beschreibung

Die Erfindung betrifft ein Schaltgerät sowie eine Verfahren zum Beenden eines Abbremsvorgangs eines dreiphasigen Drehstrommotors.

Für verschiedene Antriebszwecke werden häufig Drehstrommotoren verwendet. Diese werden von verschiedenen mechanischen oder elektronischen Schaltgeräten gestartet und teilweise auch wieder aktiv abgebremst. Typische Anwendungen solcher Kombinationen aus Anlauf- und Abbremsgeräten oder Geräten die beide Funktionen erfüllen, finden sich vor allem in der holzverarbeitenden Industrie. Hier besteht aus Sicherheitsgründen die Forderung, die teilweise erheblichen Schwungmassen der Maschinen, z.B. Fräsen, Hobelmaschinen und Kreissagen, nach dem Abschalten in einer bestimmten Zeit zum Stillstand zu bringen. Diese Forderung kann meist nur durch aktives Abbremsen erfüllt werden.

Zum aktiven Abbremsen von Drehstrommotoren bieten sich verschiedene Verfahren an. Ein häufig verwendetes Verfahren ist das Gleichstrom-Bremsen. Dieses kann unter anderem über eine Phasenanschnittsteuerung mittels einer Thyristorschaltung erfolgen, wobei der Drehstrommotor zum Abbremsen mit einem pulsierenden Gleichstrom aus dem Drehstromnetz beaufschlagt wird. Dieses Verfahren wird besonders effektiv, wenn die Schaltung einen Freilaufkreis enthält, über den der Bremsstrom wahrend der negativen Halbwelle der treibenden Spannung weiter fließen kann. Hierbei wird mithilfe eines ersten Thyristors ein Bremsstrom in den Motor eingeprägt. Über einen zweiten Thyristor wird bei einem Nulldurchgang der am ersten Thyristor anliegenden Spannung der Freilaufkreis geschlossen, so dass der Drehstrommotor weiterhin abgebremst wird. Das Abbremsen des Drehstrommotors erfolgt periodisch durch Schaltung der beiden Thyristoren.

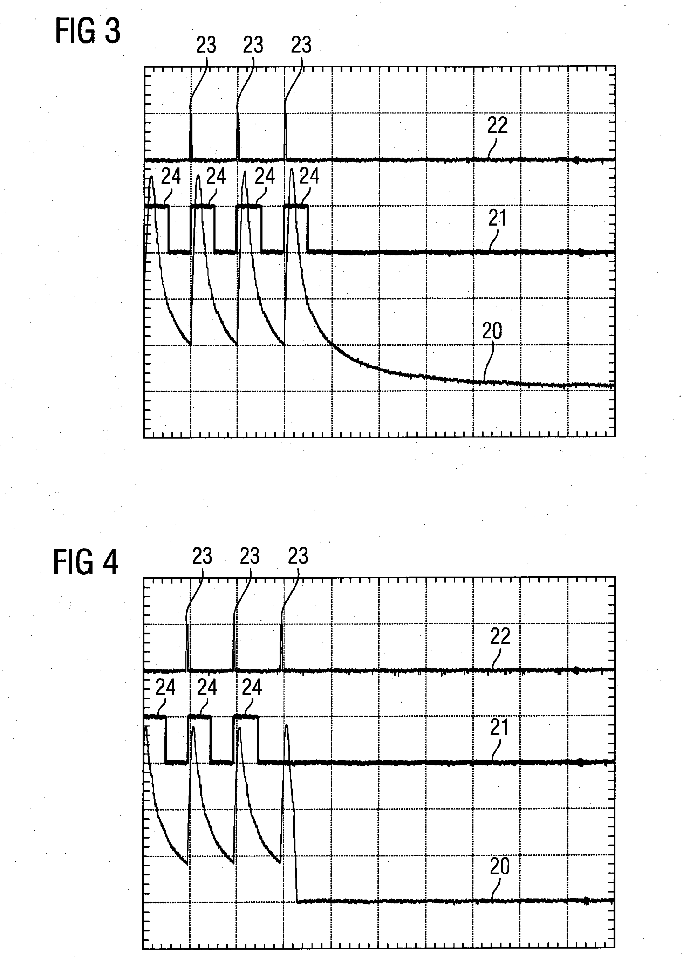

FIG 3 zeigt einen zeitlichen Verlauf eines Bremsstroms 20 eines Drehstrommotors während seines Abbremsvorgangs, wobei der Drehstrommotor mittels einer Thyristorschaltung mit zwei Thyristoren abgebremst wird. Hierbei wird mithilfe eines ersten Thyristors der Bremsstrom 20 in den dreiphasigen Drehstrommotor eingeprägt. Der zeitliche Verlauf der Ansteuerung des ersten Thyristors ist mittels der ersten Thyristorkurve 22 visualisiert. Hierbei sind die Zündungen 23 des ersten Thyristors gegenüber des vorliegenden Bremsstroms 20 aufgezeigt. Ebenso ist der zeitliche Verlauf der Ansteuerung des zweiten Thyristors mittels der zweiten Thyristorkurve 21 visualisiert. Hierbei sind ebenso die Zündungen 24 des zweiten Thyristors gegenüber des vorliegenden Bremsstroms 20 aufgezeigt. Während des gezündeten Zustandes 23,24 des ersten und zweiten Thyristors liegt ein leitender Zustand des jeweiligen Thyristors vor. Mittels des ersten Thyristors wird während des gezündeten Zustands 23 des ersten Thyristors ein Bremsstrom in Drehstrommotor eingeprägt. Mittels des zweiten Thyristors wird bei einem Nulldurchgang der am ersten Thyristor anliegenden Spannung ein Freilaufkreis geschlossen, so dass weiterhin ein Teil des eingespeisten Bremsstroms dem Drehstrommotor zugeführt wird und somit diesen abbremst. Das Abbremsen des Drehstrommotors erfolgt periodisch durch Schaltung der beiden Thyristoren. Zum Beenden des Bremsvorganges werden der erste und anschließend der zweite Thyristor nicht mehr gezündet. Nach diesem Zeitpunkt fließt der Strom im Freilaufkreis weiter bis der Haltestrom des zweiten Thyristors unterschritten wird. Bis zur Unterschreitung des Haltestroms ist der zweite Thyristor leitfähig und überbrückt zwei Motorwicklungen des Drehstrommotors, so dass ein Freilaufkreis vorliegt. Ein neuerlicher Start des Drehstrommotors ist somit nicht sofort möglich, da dies einen Kurzschluss über den zweiten Thyristor (Freilaufthyristor) verursachen würde. Bis zum Start des Drehstrommotors muss also eine Wartezeit eingehalten werden, die über eine zeitliche Verriegelung gewährleistet werden muss. Da die minimale Wartezeit von mehreren Parametern, wie z.B. Drehmotor, Bremsstrom und Temperatur, abhängt, muss sie mit ausreichender Sicherheitsreserve ausgebildet sein und kann somit bis zu mehrere Sekunden betragen.

Aus der DE 28 55 330 A1 ist eine Steuerungseinrichtung für Ein-Aus-Schalten und Bremsung eines Drehstrom-Asynchronmotors mittels zweier Thyristorschalter bekannt. Zum Abbremsen des Drehstrom-Asynchronmotors mittels der Thyristorschalter werden die Thyristorschalter für eine vorgegebene Bremszeit über eine Logik angesteuert.

Es ist Aufgabe der vorliegenden Erfindung für einen Drehstrommotor die Wartezeit zwischen dem Ende seines Abbremsvorgangs und einem neuen möglichen Motorstart zu verkürzen.

Der Abbremsvorgang des Drehstrommotors ist insbesondere die Zeitspanne des Drehstrommotors, in welcher ein Bremsstrom am Drehstrommotor anliegt. Das Ende des Abbremsvorgangs ist insbesondere der Zeitpunkt, an welchem kein Bremsstrom an dem Drehstrommotor anliegt.

Diese Aufgabe wird gelöst durch ein Verfahren gemäß Anspruch 1 und eine Vorrichtung gemäß Anspruch 4.

Vorteilhafte Weiterbildungen der Erfindung sind in den abhängigen Ansprüchen 2 bis 3 sowie 5 bis 9 angegeben.

Der mit der Erfindung erzielte Vorteil besteht darin, dass am Ende des Abbremsvorgangs des Drehstrommotors der Bremsstrom schneller zu Null geht und somit ein Neustart des Drehstrommotors früher begonnen werden kann. Dadurch, dass der zweite Thyristor nicht den Bremsstrom nach dem letzten Ansteuern des ersten Thyristors übernimmt, kommt es zu keinem Freilaufkreis des Bremsstroms und der Bremsstrom geht schneller gegen Null. Da der Bremsstrom schneller zu Null geht, kann der Drehstrommotor auch früher für einen Neustart frei geschaltet werden, ohne dass ein Kurzschluss riskiert wird.

Das letzte Ansteuern des ersten Thyristors ist insbesondere ein letztes Ansteuern des ersten Thyristors innerhalb des Abbremsvorgangs. Nach diesem letzten Ansteuern des ersten Thyristors erfolgt hinsichtlich des durchgeführten Abbremsvorgangs des Drehstrommotors keine weitere Zündung des ersten Thyristors.

Bei dem Löschen des ersten Thyristors erfolgt insbesondere der Nulldurchgang der über dem ersten Thyristor anliegenden Spannung. Insbesondere ab diesem Moment fließt über den ersten Thyristor kein Bremsstrom zu dem Drehstrommotor. Damit der zweite Thyristor den Bremsstrom übernehmen kann und somit ein Freilaufkreis erzeugt wird sollte der zweite Thyristor insbesondere ab dem Nulldurchgang gezündet sein. In dem zweiten Schritt, in welchem der zweite Thyristor den Bremsstrom "übernimmt" und wieder in den Drehstrommotor einspeist, wird ein sogenannter Freilaufkreis gebildet. Das am Drehstrommotor anliegende bremsende Moment kann hierdurch zumindest teilweise aufrechterhalten werden.

Bei dem Schaltgerät erfolgt die Energieversorgung des Drehstrommotors über die Drehstrommotorleitungen sowie den Versorgungsleitungen. Jede Phase des dreiphasigen Drehstrommotors und des Schaltgerätes umfasst eine Drehstrommotorleitung und eine Versorgungsleitung, welche elektrisch leitend miteinander verbunden ist oder verbindbar ist.

Mittels der Verarbeitungseinheit kann während eines Abbremsvorgangs des Drehstrommotors bei einem letzten Zünden des ersten Thyristors gezielt die Ansteuerung des zweiten Thyristors unterbleiben. Auf diese Weise wird vermieden, dass einen zeitgleiche oder nachgeschaltete Zündung des zweiten Thyristors nach der Zündung des ersten Thyristors zu einem Freilaufkreis des Bremsstroms führt. Ein durch den zweiten Thyristor ermöglichter Freilaufkreis des Bremsstroms wird somit am Ende des Abbremsvorgangs unterbunden. Der Bremsstrom in der ersten und zweiten Drehstrommotorleitung geht somit schneller zu Null.

Die Drehstrommotorleitungen umfasst vorzugsweise jeweils ein ausgansseitiges Anschlussmittel, an welches eine Phase des Drehstrommotors anschließbar ist. Ferner umfasst vorzugsweise die Versorgungsleitung jeweils ein eingangsseitiges Anschlussmittel, an welches eine Phase eines Versorgungsnetzes anschließbar ist.

In einer vorteilhaften Ausführungsform der Erfindung erfolgt der Abbremsvorgang des Drehstrommotors mittels eines Schaltgerätes, wobei das Schaltgerät eine erste, zweite und dritte Drehstrommotorleitung, eine erste und zweite Versorgungsleitung und den ersten und zweiten Thyristor umfasst, wobei die erste, zweite und dritte Drehstrommotorleitung mit dem Drehstrommotor verbunden ist, wobei der erste Thyristor mit der ersten Versorgungsleitung und mit der ersten Drehstrommotorleitung verbunden ist, der zweiter Thyristor mit der ersten Drehstrommotorleitung und der zweiten Drehstrommotorleitung verbunden ist und die zweite Drehstrommotorleitung mit der zweiten Versorgungsleitung verbunden ist, wobei in dem ersten Schritt der erste Thyristor derart angesteuert wird, dass über die erste und zweite Versorgungsleitung ein Bremsstrom in den Drehstrommotor eingespeist wird, so dass das den Drehstrommotor bremsende Moment entsteht. Dadurch, dass nach der letzten Zündung des ersten Thyristors und insbesondere nach dem letzten Löschen des ersten Thyristors kein gezündeter (leitender) zweiter Thyristor vorliegt, wird das Entstehen eines Freilaufkreises unterbunden, so dass der Strom in der ersten und zweiten Drehstrommotorleitung schneller zu Null und somit ein früherer Neustart des Drehstrommotors ermöglicht wird.

Das Schaltgerät kann innerhalb oder außerhalb des Drehstrommotors ausgebildet sein. Der erste Thyristor ist vorzugsweise für einen voreingestellten Strom oder ein voreingestelltes Zeitfenster leitend. Im nichtleitenden Zustand wird der Stromfluss, bis auf das Ende des Abbremsvorgangs, während des Abbremsvorgangs durch den gezündeten leitenden zweiten Thyristor aufrechterhalten. Sobald der erste Thyristor wieder angesteuert und somit leitend wird, wird erneut ein Bremsstrom von der ersten Versorgungsleitung in den Drehstrommotor eingespeist. Dieser Vorgang wird vorzugsweise mehrfach wiederholt. Bei dem letzten Zünden des ersten Thyristors unterbleibt eine gleichzeitige oder darauf folgende Ansteuerung des zweiten Thyristors. Der zweite Thyristor wird folglich nicht mehr in einen leitenden Zustand geschaltet. Er hält somit den nichtleitenden Zustand inne, so dass der Strom in der ersten und zweiten Drehstrommotorleitung und somit im Drehstrommotor schneller zu Null wird.

Während des Abbremsvorgangs ist vorzugsweise die dritte Drehstrommotorleitung nicht elektrisch leitend mit einer Versorgungsleitung verbunden. Insbesondere liegt während des Abbremsvorgangs kein Stromfluss innerhalb der dritten Drehstrommotorleitung vor. Die Ansteuerung des ersten und zweiten Thyristors erfolgt vorzugsweise durch eine Verarbeitungseinheit. Die Verarbeitungseinheit steuert insbesondere den Zeitpunkt der Ansteuerung des ersten und zweiten Thyristors.

Der erste Thyristor ist vorzugsweise eingangsseitig mit der ersten Versorgungsleitung und ausgangsseitg mit der ersten Drehstrommotorleitung verbunden. Der zweite Thyristor ist vorzugsweise eingangsseitig mit der zweiten Drehstrommotorleitung und ausgangsseitg mit der ersten Drehstrommotorleitung verbunden.

Vorzugsweise liegt der erste und zweite Thyristor jeweils mit seinen Kathoden oder jeweils mit seinen Anoden an der erste Drehstrommotorleitung an.

Der erste und zweite Schritt wiederholt sich während des Abbremsvorgangs, vorzugsweise jeweils innerhalb einer Periode der an dem ersten Thyristor anliegenden Spannung, mindestens einmal. Vorzugsweise Wiederholen sich die beiden Schritte innerhalb eines Abbremsvorgangs fortlaufend, bis auf die letzte Ansteuerung des ersten Thyristors.

In einer weiteren vorteilhaften Ausführungsform der Erfindung erfolgt das Ansteuern des ersten und/oder zweiten Thyristors jeweils für ein voreingestelltes Zeitfenster oder einen voreingestellten Strom. Insbesondere wird durch das Zeitfenster oder den Strom der Zeitraum des ersten und/oder zweiten Thyristors definiert, in welcher er gezündet und somit leitfähig ist. Auf diese Weise kann gezielt der Bremsstrom über den ersten Thyristor bzw. durch den zweiten Thyristor mittels des Freilaufkreises in den Drehstrommotor eingespeist werden, so dass ein den Drehstrommotor bremsendes Moment entsteht.

In einer weiteren vorteilhaften Ausführungsform der Erfindung erfolgt der erste und zweite Schritt jeweils innerhalb einer Periode des über dem ersten Thyristor liegenden Stroms. Das Zünden der Thyristoren erfolgt somit innerhalb einer Periode des Stroms und wird vorzugsweise während des Abbremsvorgangs bei jeder Perioden wiederholt durchgeführt (bis auf die letzte Zündung des ersten Thyristors). Insbesondere erfolgt die Zündung des zweiten Thyristors während des Nulldurchgangs des über dem ersten Thyristor anliegenden Stroms oder der über dem ersten Thyristor anliegenden Spannung.

In einer weiteren vorteilhaften Ausführungsform der Erfindung erfolgt das Zünden des zweiten Thyristors gleichzeitig mit der Zündung des ersten Thyristors. Hierbei ist unter Ansteuern insbesondere das Zünden der Thyristoren gemeint.

In einer weiteren vorteilhaften Ausführungsform der Erfindung ist die Verarbeitungseinheit während des Abbremsvorgangs des Drehstrommotors ferner dazu ausgebildet:
- in einem ersten Schritt den erste Thyristor derart anzusteuern, dass über die erste und zweite Versorgungsleitung ein Bremsstrom in den Drehstrommotor eingespeist wird, so dass ein den Drehstrommotor bremsendes Moment entsteht,
- in einem zweiten Schritt den zweiten Thyristor derart anzusteuern, dass bei einem Löschen des ersten Thyristors der Bremsstrom vom zweiten Thyristor übernommen wird, so dass das bremsende Moment aufrechterhalten wird,
- die beiden Schritte zu wiederholen.

Insbesondere wird durch die Verarbeitungseinheit nach einem letzten Ansteuern des ersten Thyristors verhindert, dass der zweite Schritt erfolgt und es zu einem Freilaufkreis des Bremsstroms kommt. Durch den Freilaufkreis wird das durch den ersten Thyristor herbeigeführte bremsende Moment zumindest teilweise aufrechterhalten.

In dem ersten Schritt wird der erste Thyristor gezündet, so dass über die erste und zweite Versorgungsleitung ein Bremsstrom in den Drehstrommotor eingespeist wird und ein den Drehstrommotor bremsendes Moment entsteht. In dem zweiten Schritt wird der zweite Thyristor so angesteuert, dass bei einem Löschen des ersten Thyristors der Bremsstrom vom zweiten Thyristor übernommen wird, so dass das bremsende Moment zumindest teilweise aufrechterhalten wird. Dieser Vorgang wird vorzugsweise während des Abbremsvorgangs mindestens einmal wiederholt. Vorzugsweise werden die beiden Schritte bis auf die letzte Zündung des ersten Thyristors periodisch bezüglich des am ersten Thyristor anliegenden Stroms durchgeführt. Bei dem letzten Zünden des ersten Thyristors während des Abbremsvorgangs des Drehstrommotors unterbleibt die gleichzeitige oder nachgeschaltete Zündung des zweiten Thyristors, so dass kein Freilaufkreis entsteht. Hierdurch geht der Strom in der ersten und zweiten Drehstrommotorleitung schneller zu Null.

In einer weiteren vorteilhaften Ausführungsform der Erfindung liegt der erste und zweite Thyristor jeweils mit seinen Kathoden oder jeweils mit seinen Anoden an der erste Drehstrommotorleitung an.

In einer weiteren vorteilhaften Ausführungsform der Erfindung ist die dritte Drehstrommotorleitung mit der ersten oder dritten Versorgungsleitung verbunden.

In einer weiteren vorteilhaften Ausführungsform der Erfindung umfasst die erste Versorgungsleitung ein erstes Schaltelement, wobei der erste Thyristor mit der ersten Versorgungsleitung derart verbunden ist, dass im geöffneten Zustand des ersten Schaltelements ein Strom über den ersten Thyristor fließen kann. Das erste Schaltelement umfasst insbesondere zwei gegenläufige Thyristoren. Ferner ist vorzugsweise das erste Schaltelement mittels eins zweiten Schaltelements überbrückbar.

In einer weiteren vorteilhaften Ausführungsform der Erfindung ist die dritte Drehstrommotorleitung mit dem ersten Schaltelement verbunden.

In einer weiteren vorteilhaften Ausführungsform der Erfindung ist der zweite Thyristor und/oder erste Thyristor für ein voreingestelltes Zeitfenster ansteuerbar. Die Ansteuerung erfolgt vorzugsweise durch die Verarbeitungseinheit.

In einer weiteren vorteilhaften Ausführungsform der Erfindung ist die dritte Drehstrommotorleitung mit der ersten Versorgungsleitung verbunden und die zweite Versorgungsleitung umfasst ein drittes Schaltelement, insbesondere zwei gegenläufige Thyristoren. Vorzugsweise ist dem ersten Thyristor eine Kommutierungsdrossel vorgeschaltet. Die Kommutierung des Bremsstromes zwischen den beiden Thyristoren erfolgt vorzugsweise periodisch mit Hilfe der Kommutierungsdrossel.

In einer weiteren vorteilhaften Ausführungsform der Erfindung umfasst die zweite Versorgungsleitung ein drittes Schaltelement, insbesondere zwei gegenläufige Thyristoren. Das dritte Schaltelement ist vorzugsweise mittels eins vierten Schaltelements überbrückbar. Die zweite Drehstrommotorleitung umfasst vorzugsweise ein fünftes Schaltelement, mit welchem der Stromfluss innerhalb der Leitung unterbrochen werden kann.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung eines ersten Schaltgerätes zum Beenden eines Abbremsvorgangs eines dreiphasigen Drehstrommotors,
- FIG 2: eine schematische Darstellung eines zweiten Schaltgerätes zum Beenden eines Abbremsvorgangs eines dreiphasigen Drehstrommotors,
- FIG 3: einen zeitlichen Verlauf eines Bremsstroms eines Drehstrommotors während seines Abbremsvorgangs, wobei der Drehstrommotor mittels einer Thyristorschaltung mit zwei Thyristoren abgebremst wird, und
- FIG 4: einen zeitlichen Verlauf eines Bremsstroms eines Drehstrommotors während seines Abbremsvorgangs, wobei der Drehstrommotor mittels eines Schaltgerätes gemäß FIG 1 oder FIG 2 abgebremst wird.

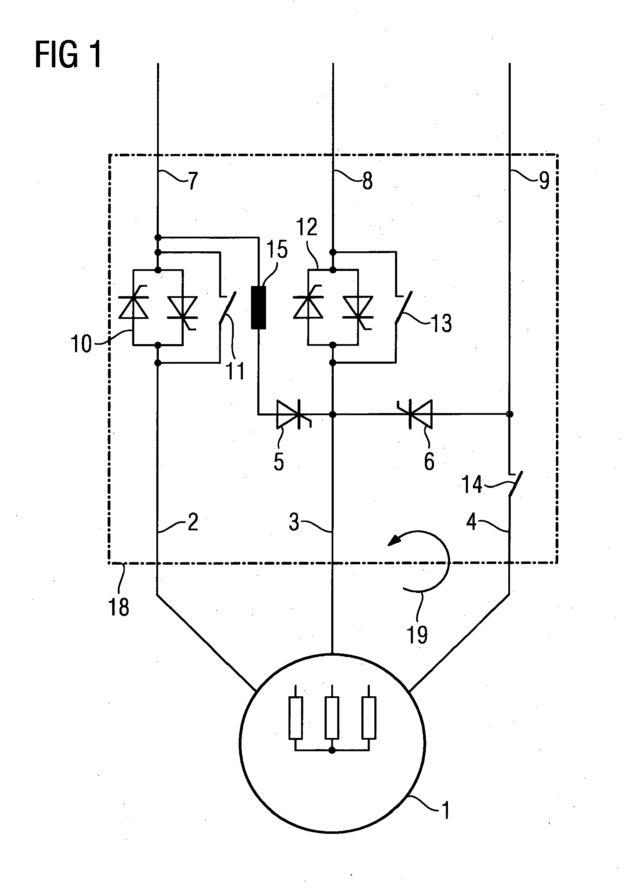

FIG 1 zeigt eine schematische Darstellung eines ersten Schaltgerätes 18 zum Beenden eines Abbremsvorgangs eines dreiphasigen Drehstrommotors 1. Das Schaltgerät 18 ist mit den einzelnen Phasen des dreiphasigen Drehstrommotors 1 elektrisch leitend verbunden. Das Schaltgerät 18 weist je Phase eine Versorgungsleitung 7,8,9 und eine Drehstrommotorleitung 2,3,4 auf. Die Versorgungsleitungen 7,8,9 sind eingangsseitig am Schaltgerät 18 angeordnet und sind einem Versorgungsnetz zugewandt und weisen vorzugsweise jeweils Anschlussmittel auf, so dass mittels externer Leitungen eine Verbindung zu dem Versorgungsnetz erfolgen kann. Die einzelnen Drehstrommotorleitungen 2,3,4 sind ausgangsseitig am Schaltgerät 18 angeordnet und sind dem Drehstrommotor 1 zugewandt. Da das Schaltgerät 18 außerhalb des Drehstrommotors 1 angeordnet ist, weisen die Drehstrommotorleitungen 2,3,4 jeweils Anschlussmittel auf, so dass je Phase des Drehstrommotors 1 eine Verbindung zu der zugehörigen Drehstrommotorleitungen 2,3,4 mittels externer Leitungen erfolgen kann.

Im Normalbetrieb wird der Drehstrommotor 1 über die einzelnen Phasen des Schaltgerätes mit Energie vom Versorgungsnetz versorgt, so dass der Drehstrommotor 1 betrieben werden kann.

Das Schaltgerät 18 weist in seiner ersten Phase eine erste Versorgungsleitung 7, eine erstes Schaltelement 10 und eine dritte Drehstrommotorleitung 2 auf. Das erste Schaltelement 10 ist eingangsseitig mit der ersten Versorgungsleitung 7 verbunden. Ausgangsseitig ist an das erste Schaltelement 10 die dritte Drehstrommotorleitung 2 angeschlossen. Diese dritte Drehstrommotorleitung 2 wird letztendlich mit einer ersten Phase des Drehstrommotors 1 verbunden. Das erste Schaltelement 10 umfasst zwei gegenläufige Thyristoren und ist mittels eines zweiten Schaltelementes 11 überbrückbar.

Die zweite Phase des Schaltgerätes 18 umfasst eine zweite Versorgungsleitung 8, ein drittes Schaltelement 12, ein viertes Schaltelement 13, und eine erste Drehstrommotorleitung 3. Das dritte Schaltelement 12, welches zwei gegenläufige Thyristoren umfasst, ist eingangsseitig mit der zweiten Versorgungsleitung 8 verbunden. Ausgangsseitig ist das dritte Schaltelement 12 mit der ersten Drehstrommotorleitung 3 verbunden. Das dritte Schaltelement 12 ist mittels eines vierten Schaltelementes 13 überbrückbar. Die erste Drehstrommotorleitung 3 ist mit einer zweiten Phase des Drehstrommotors 1 verbunden.

Die dritte Phase des Schaltgerätes 18 umfasst eine dritte Versorgungsleitung 9, ein fünftes Schaltelement 14 und eine zweite Drehstrommotorleitung 4. Die dritte Versorgungsleitung 9 ist mit der zweiten Drehstrommotorleitung 4 elektrisch leitend verbunden. Die zweite Drehstrommotorleitung 4 umfasst das fünfte Schaltelement 14, über welches die zweite Drehstrommotorleitung 4 geöffnet bzw. geschlossen werden kann. Während des Abbremsvorgangs des Drehstrommotors 1 ist das fünfte Schaltelement 14 geschlossen, so dass eine elektrisch leitende Verbindung vorliegt.

Das Schaltgerät 18 umfasst ferner einen ersten Thyristor 5 und einen zweiten Thyristor 6. Der erste Thyristor 5 ist eingangsseitig mit der ersten Versorgungsleitung 7 verbunden. Hierbei ist eine Kommutierungsdrossel 15 zwischengeschaltet. Ausgangsseitig ist der erste Thyristor 5 mit der ersten Drehstrommotorleitung 3 verbunden. Der zweite Thyristor 6 ist eingangsseitig mit der zweiten Drehstrommotorleitung 4 verbunden. Ausgangsseitig ist der zweite Thyristor 6 mit der ersten Drehstrommotorleitung 3 verbunden. Während eines Abbremsvorganges des Drehstrommotors 1 ist das erste Schaltelement 10, das zweite Schaltelement 11, das dritte Schaltelement 12 und das vierte Schaltelement 13 geöffnet. Mittels einer nicht abgebildeten Verarbeitungseinheit kann der erste und zweite Thyristor 5,6 derart angesteuert werden, dass ein Bremsstrom in den Drehstrommotor 1 eingespeist werden kann, so dass ein bremsendes Moment für den Drehstrommotor entsteht. Eine derartige Ansteuerung ist beispielsweise in FIG 4 gezeigt. Hierbei wird zunächst der erste Thyristor 5 gezündet, so dass ein Strom, in diesem Fall ein Bremsstrom, über die erste Versorgungsleitung 7 und die erste Drehstrommotorleitung 3 in den Drehstrommotor 1 eingespeist wird. Die dritte Phase weist hierbei ebenso einen leitenden Zustand auf. Sobald die Stromkurve des an der ersten Versorgungsleitung 7 anliegenden Stromes von der positiven Halbwelle den Nulldurchgang hat, erlischt der erste Thyristor 5 und der in den Drehstrommotor 1 eingespeiste Bremsstrom würde abbrechen. Um jedoch weiterhin das den Drehstrommotor 1 bremsende Moment zumindest teilweise aufrecht zu erhalten, wird der zweite Thyristor 6 entweder zeitgleich mit der Zündung des ersten Thyristors 5 spätestens jedoch vor dem Nulldurchgang der Stromkurve am ersten Thyristor 5 gezündet. Der zweite Thyristor 6 kann somit den am Drehstrommotor 1 anliegenden Bremsstrom über die zweite Drehstrommotorleitung 4 abgreifen und wieder über die erste Drehstrommotorleitung 3 dem Drehstrommotor 1 zuführen. Es entsteht ein sogenannter Freilaufkreis 19. Erst wenn der erste Thyristor 5 erneut gezündet wird, wird über die erste Versorgungsleitung 7 erneut ein Bremsstrom dem Drehstrommotor 1 zugeführt. Die Steuerung der Zündzeitpunkte des ersten und zweiten Thyristors 5,6 erfolgt durch die Verarbeitungseinheit, so dass ein optimales bremsendes Moment am Drehstrommotor 1 anliegt. Der Vorgang des Zündens des ersten Thyristors 5 und des zweiten Thyristors 6 wird wiederholt durchgeführt, so dass der Drehstrommotor 1 schrittweise abgebremst wird. Um ein möglich rasches Beenden des Abbremsvorgangs des Drehstrommotors 1 am Ende des Abbremsvorgangs herbeizuführen, wird nach einem letzten Ansteuern des ersten Thyristors 5 der zweite Thyristor 6 nicht mehr angesteuert, so dass ein Freilaufkreis 19 unterbleibt. Hierdurch geht der Bremsstrom am Drehstrommotor 1 schlagartig gegen Null. Würde hingegen der zweite Thyristor 6 gezündet werden, so würde der Bremsstrom langsam absinken, bis der Bremsstrom im Freilaufkreis 19 den Haltestrom des zweiten Thyristors 6 unterschreitet. Dieser Vorgang kann jedoch einige Sekunden in Anspruch nehmen. Für einen neuerlichen Start des Motors darf jedoch kein Freilaufkreis 19 vorliegen, da ein Neustart des Drehstrommotors 1 und somit ein schließen des ersten und dritten Schaltelementes 10,13 zu einen Kurzschluss über den zweiten Thyristor führen würde. Bis zum Start des Motors müsste somit eine Wartezeit eingehalten werden, welche sicherstellt, dass kein Freilaufkreis 19 vorliegt. Dadurch, dass nach dem letzten Ansteuern des ersten Thyristors 5 keine Zündung des zweiten Thyristors 6 und somit kein Freilaufkreis 19 erzeugt wird, kann sichergestellt werden, dass der Bremsstrom schlagartig gegen Null geht und somit unmittelbar nach dem Löschen des ersten Thyristors 5 ein Neustart des Drehstrommotors 1 ermöglicht wird.

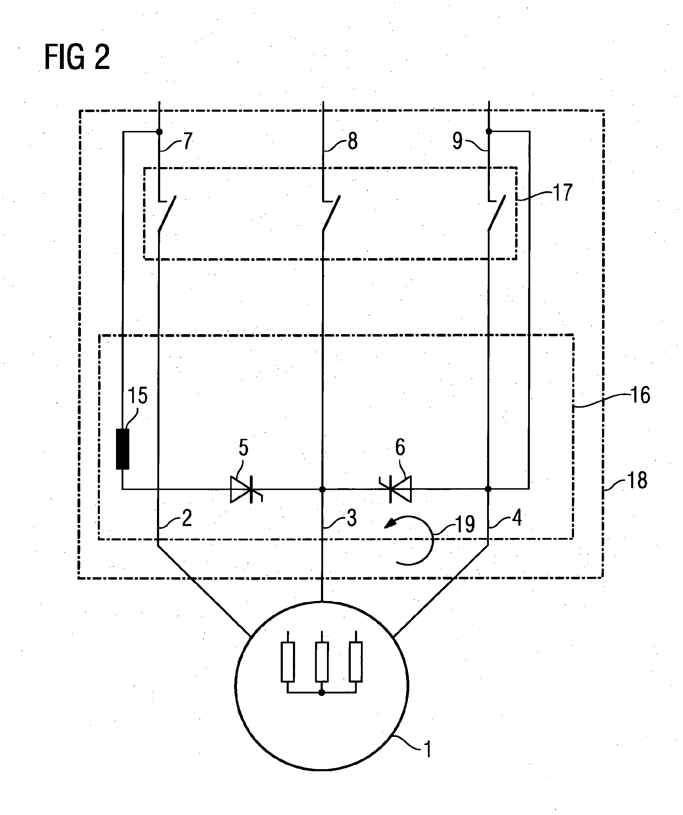

FIG 2 zeigt eine schematische Darstellung eines zweiten Schaltgerätes 18 zum Beenden eines Abbremsvorgangs eines dreiphasigen Drehstrommotors 1. Das Schaltgerät 18 umfasst hierbei eine Schaltgeräteeinheit 17 für die Anlauffunktion des Drehstrommotors 1, eine Schaltgeräteeinheit 16 für die Bremsfunktion des Drehstrommotors 1, eine erste, zweite, dritte Versorgungsleitung 7,8,9 und eine erste, zweite, dritte Drehstrommotorleitung 2,3,4. Die Schaltgeräteeinheit 17 dient dem Neustart des mit dem Schaltgerät 18 verbundenen Drehstrommotors 1. Über einzelne Schaltelemente innerhalb der Schaltgeräteeinheit 17 können die einzelnen Phasen geöffnet bzw. geschlossen werden. Die Schaltgeräteeinheit 16 umfasst eine Kommutierungsdrossel 15, welche oberhalb der Schaltgeräteeinheit 17 mit der ersten Versorgungsleitung 7 verbunden ist. Ferner ist ein erster Thyristor 5 eingangsseitig mit der Kommutierungsdrossel 15 verbunden und ausgangsseitig mit der ersten Drehstrommotorleitung 3 verbunden. Ein zweiter Thyristor 6 ist eingangsseitig mit der zweiten Drehstrommotorleitung 4 verbunden und ausgangsseitig mit der ersten Drehstrommotorleitung 3 verbunden. Die Kommutierungsdrossel 15, der erste Thyristor 5 und zweite Thyristor 6 sind Komponenten der Schaltgeräteeinheit 16. Durch gezielte Ansteuerung des ersten Thyristors 5 kann ein Bremsstrom in den Drehstrommotor 1 eingespeist werden. Mittels des zweiten Thyristors 6 kann der Bremsstrom innerhalb des Drehstrommotors 1 aufrecht erhalten werden, so dass ein Freilaufkreis 19 entsteht. Auf diese Weise kann über längere Zeit ein Bremsstrom dem Drehstrommotor 1 zugeführt werden, so dass ein den Drehstrommotor 1 bremsendes Moment entsteht. Damit am Ende des Abbremsvorgangs ein rascher Neustart des Drehstrommotors 1 erfolgen kann, erfolgt während des Abbremsvorgangs nach einem letzten Ansteuern des ersten Thyristors 5 keine Ansteuerung des zweiten Thyristors 6, so dass ein Freilaufkreis 19 unterbleibt. Der Bremsstrom geht folglich rasch gegen Null.

FIG 3 zeigt einen zeitlichen Verlauf eines Bremsstroms 20 eines Drehstrommotors während seines Abbremsvorgangs, wobei der Drehstrommotor mittels einer Thyristorschaltung mit zwei Thyristoren abgebremst wird. Der zeitliche Verlauf der Ansteuerung des ersten Thyristors ist mittels der ersten Thyristorkurve 22 visualisiert. Hierbei sind die Zündungen 23 des ersten Thyristors gegenüber des vorliegenden Bremsstroms 20 aufgezeigt. Ebenso ist der zeitliche Verlauf der Ansteuerung des zweiten Thyristors mittels der zweiten Thyristorkurve 21 visualisiert. Hierbei sind ebenso die Zündungen 25 des zweiten Thyristors gegenüber des vorliegenden Bremsstromes 20 aufgezeigt. Mittels des ersten Thyristors wird aus der Versorgungsleitung der Bremsstrom 20 in den Drehstrommotor eingespeist. Mittels des zweiten Thyristors wird der eingespeist Bremsstrom 20 "aufgegriffen" und erneut dem Drehstrommotor zugeführt. Es ist ersichtlich, dass nach einer letzten Zündung 23 des ersten Thyristors eine Zündung 24 des zweiten Thyristors 6 erfolgt. Nach diesem Zeitpunkt fließt der Bremsstrom 20 im Freilaufkreis weiter, bis der Haltestrom des zweiten Thyristors unterschritten wird. Während dieser Zeit ist der zweite Thyristor leitfähig und überbrückt zwei Motorwicklungen. Der Bremsstrom 20 sinkt somit allmählich, bis der Haltestrom am zweiten Thyristor unterschritten wird. Dieser Vorgang kann je nach Ausbildung des zweiten Thyristors mehrere Sekunden dauern. Für einen Neustart des Drehstrommotors muss jedoch sichergestellt werden, dass kein Freilaufkreis und somit kein leitender Zustand am zweiten Thyristor vorliegt, da dies einen Kurzschluss über den zweiten Thyristors verursachen würde. Bis zum Neustart des Drehstrommotors muss also eine Wartezeit eingehalten werden, die über eine zeitliche Verriegelung gewährleistet werden muss. Folglich muss nach dem letzten Zünden 23,24 des ersten und zweiten Thyristors eine Wartzeit erzwingen werden, um einen Kurzschluss am zweiten Thyristor zu vermeiden.

FIG 4 zeigt einen zeitlichen Verlauf eines Bremsstroms 20 eines Drehstrommotors während seines Abbremsvorgangs, wobei der Drehstrommotor mittels eines Schaltgerätes gemäß FIG 1 oder 2 abgebremst wird. Im Vergleich zu FIG 3 erfolgt hierbei nach einer letzten Zündung 23 des ersten Thyristors keine Zündung des zweiten Thyristors. Folglich geht der Bremsstrom 20 rasch gegen Null, so dass ein Neustart des Drehstrommotors erfolgen kann. Im Vergleich zu einem Bremsvorgang gemäß FIG 3 kann somit ein schnellerer Neustart des Drehstrommotors erfolgen, ohne dass eine Gefahr eines Kurzschlusses vorliegt. In FIG 4 sind drei Zündungen 23 des ersten Thyristors 5 und drei Zündungen 24 des zweiten Thyristors 6 abgebildet. In FIG 3 sind drei Zündungen 23 des ersten Thyristors und vier Zündungen 24 des zweiten Thyristors abgebildet. Während der Zündung 23,24 liegt ein leitender Zustand am jeweiligen Thyristor vor.

## Patentansprüche

1. Verfahren zum Beenden eines Abbremsvorgangs eines dreiphasigen Drehstrommotors (1), wobei der Abbremsvorgang des Drehstrommotors (1) mittels eines Schaltgerätes (18) erfolgt, wobei das Schaltgerät (18) eine erste, zweite und dritte Drehstrommotorleitung (2,3,4), eine erste und dritte Versorgungsleitung (7,9) und einen ersten und zweiten Thyristor (5,6) umfasst, wobei die erste, zweite und dritte Drehstrommotorleitung (2,3,4) mit dem Drehstrommotor (1) verbunden ist, wobei der erste Thyristor (5) mit der ersten Versorgungsleitung (7) und mit der ersten Drehstrommotorleitung (3) verbunden ist, der zweite Thyristor (6) mit der ersten Drehstrommotorleitung (3) und der zweiten Drehstrommotorleitung (4) verbunden ist und die zweite Drehstrommotorleitung (4) mit der dritten Versorgungsleitung (9) verbunden ist, wobei die Ansteuerung des ersten und zweiten Thyristors (5,6) durch eine Verarbeitungseinheit des Schaltgerätes (18) erfolgt, wobei die Verarbeitungseinheit während des Abbremsvorgangs des Drehstrommotors (1):
- in einem ersten Schritt den ersten Thyristor (5) derart ansteuert, dass über die erste und dritte Versorgungsleitung (7,9) ein Bremsstrom (20) in den Drehstrommotor (1) eingespeist wird, so dass ein den Drehstrommotor (1) bremsendes Moment entsteht,
- in einem zweiten Schritt den zweiten Thyristor (6) derart ansteuert, dass bei einem Löschen des ersten Thyristors (5) der Bremsstrom (20) vom zweiten Thyristor (6) übernommen wird und das bremsende Moment aufrechterhalten wird,
- die beiden Schritte wiederholt,
**dadurch gekennzeichnet, dass**
die Verarbeitungseinheit gezielt am Ende des Abbremsvorgangs des Drehstrommotors (1) nach einem letzten Ansteuern des ersten Thyristors (5) ein Ansteuern des zweiten Thyristors unterbindet, so dass ein Übernehmen des Bremsstroms (20) vom zweiten Thyristor (6) unterbleibt.

2. Verfahren nach Anspruch 1, wobei das Ansteuern des ersten und/oder zweiten Thyristors (5,6) jeweils für ein voreingestelltes Zeitfenster oder einen voreingestellten Strom erfolgt.

3. Verfahren nach einem der vorhergehenden Ansprüche, wobei der erste und zweite Schritt jeweils innerhalb einer Periode des über dem ersten Thyristor (5) liegenden Stroms erfolgt.

4. Schaltgerät (18) zum Beenden eines Abbremsvorgangs eines dreiphasigen Drehstrommotors (1), wobei das Schaltgerät (18) eine erste, zweite und dritte Drehstrommotorleitung (2,3,4), eine erste und dritte Versorgungsleitung (7,9) und einen ersten und zweiten Thyristor (5,6) umfasst, wobei die erste, zweite und dritte Drehstrommotorleitung (2,3,4) mit dem Drehstrommotor (1) verbindbar ist, wobei der erste Thyristor (5) mit der ersten Versorgungsleitung (7) und mit der ersten Drehstrommotorleitung (3) verbunden ist, der zweiter Thyristor (6) mit der ersten Drehstrommotorleitung (3) und der zweiten Drehstrommotorleitung (4) verbunden ist und die zweite Drehstrommotorleitung (4) mit der dritten Versorgungsleitung (9) verbunden ist, wobei die Ansteuerung des ersten und zweiten Thyristors (5,6) durch eine Verarbeitungseinheit des Schaltgerätes (18) erfolgt, wobei die Verarbeitungseinheit derart ausgebildet ist, dass sie während des Abbremsvorgangs des Drehstrommotors (1) :
- in einem ersten Schritt den ersten Thyristor (5) derart ansteuert, dass über die erste und dritte Versorgungsleitung (7,9) ein Bremsstrom (20) in den Drehstrommotor (1) eingespeist wird, so dass ein den Drehstrommotor (1) bremsendes Moment entsteht,
- in einem zweiten Schritt den zweiten Thyristor (6) derart ansteuert, dass bei einem Löschen des ersten Thyristors (5) der Bremsstrom (20) vom zweiten Thyristor (6) übernommen wird und das bremsende Moment aufrechterhalten wird,
- die beiden Schritte wiederholt,
**dadurch gekennzeichnet, dass**
die Verarbeitungseinheit derart ausgebildet ist, dass sie gezielt am Ende des Abbremsvorgangs des Drehstrommotors (1) nach einem letzten Ansteuern des ersten Thyristors (5) ein Ansteuern des zweiten Thyristors unterbindet, so dass ein Übernehmen des Bremsstroms (20) vom zweiten Thyristor (6) unterbleibt.

5. Schaltgerät nach Anspruch 4, wobei der erste und zweite Thyristor (5,6) jeweils mit seinen Kathoden oder jeweils mit seinen Anoden an der erste Drehstrommotorleitung (3) anliegt.

6. Schaltgerät nach einem der Ansprüche 4 bis 5, wobei die dritte Drehstrommotorleitung (2) mit der ersten Versorgungsleitung (7) verbunden ist.

7. Schaltgerät nach einem der Ansprüche 4 bis 6, wobei der zweite Thyristor (6) und/oder erste Thyristor (5) für ein voreingestelltes Zeitfenster ansteuerbar ist.

8. Schaltgerät nach einem der Ansprüche 4 bis 7, wobei die erste Versorgungsleitung (7) ein erstes Schaltelement (10) umfasst, wobei der erste Thyristor (5) mit der ersten Versorgungsleitung (7) derart verbunden ist, dass im geöffneten Zustand des ersten Schaltelements (10) ein Strom über den ersten Thyristor (5) fließen kann.

9. Schaltgerät nach einem der Ansprüche 4 bis 8 wobei die dritte Drehstrommotorleitung (2) mit der ersten Versorgungsleitung (7) verbunden ist und die zweite Versorgungsleitung (8) ein drittes Schaltelement (12), insbesondere zwei gegenläufige Thyristoren, umfasst.

## Claims

1. Method for terminating a braking process of a three-phase AC motor (1), wherein the braking process of the AC motor (1) is performed by means of a switching device (18), wherein the switching device (18) comprises a first, second and third AC motor line (2,3,4), a first and third supply line (7,9) and a first and second thyristor (5,6), wherein the first, second and third AC motor lines (2,3,4) are connected to the AC motor (1), wherein the first thyristor (5) is connected to the first supply line (7) and to the first AC motor line (3), the second thyristor (6) is connected to the first AC motor line (3) and to the second AC motor line (4), and the second AC motor line (4) is connected to the third supply line (9), wherein the actuation of the first and second thyristors (5,6) is performed by a processing unit of the switching device (18), wherein during the braking process of the AC motor (1) the processing unit:
- in a first step, actuates the first thyristor (5) in such a manner that a braking current (20) is injected into the AC motor (1) by way of the first and third supply lines (7, 9) such that a torque which brakes the AC motor (1) is produced,
- in a second step, actuates the second thyristor (6) in such a manner that when the first thyristor (5) is quenched the braking current (20) is taken on by the second thyristor (6) and the braking torque is maintained,
- repeats the two steps,
**characterised in that**
at the end of the braking process of the AC motor (1) the processing unit specifically suppresses an actuation of the second thyristor after a last actuation of the first thyristor (5) so that the second thyristor (6) does not take on the braking current (20).

2. Method according to claim 1, wherein the actuation of the first and/or second thyristor (5,6) is effected in each case for a preset time slot or a preset current.

3. Method according to one of the preceding claims, wherein the first and second steps take place within a period when current is lying across the first thyristor (5).

4. Switching device (18) for terminating a braking process of a three-phase AC motor (1), wherein the switching device (18) comprises a first, second and third AC motor line (2,3,4), a first and third supply line (7,9) and a first and second thyristor (5,6), wherein the first, second and third AC motor lines (2,3,4) can be connected to the AC motor (1), wherein the first thyristor (5) is connected to the first supply line (7) and to the first AC motor line (3), the second thyristor (6) is connected to the first AC motor line (3) and to the second AC motor line (4), and the second AC motor line (4) is connected to the third supply line (9), wherein the actuation of the first and second thyristors (5,6) is performed by a processing unit of the switching device (18), wherein the processing unit is furthermore designed in such a manner that during the braking process of the AC motor (1):
- in a first step, it actuates the first thyristor (5) in such a manner that a braking current (20) is injected into the AC motor (1) by way of the first and third supply lines (7,9) such that a torque which brakes the AC motor (1) is produced,
- in a second step, it actuates the second thyristor (6) in such a manner that when the first thyristor (5) is quenched the braking current (20) is taken on by the second thyristor (6) and the braking torque is maintained,
- it repeats the two steps,
**characterised in that**
the processing unit is designed in such a manner that at the end of the braking process of the AC motor (1) it specifically suppresses an actuation of the second thyristor after a last actuation of the first thyristor (5) so that the second thyristor (6) does not take on the braking current (20).

5. Switching device according to claim 4, wherein the first and second thyristors (5,6) each lie with their cathode or each with their anode against the first AC motor line (3).

6. Switching device according to one of claims 4 to 5, wherein the third AC motor line (2) is connected to the first supply line (7).

7. Switching device according to one of claims 4 to 6, wherein the second thyristor (6) and/or first thyristor (5) can be actuated for a preset time slot.

8. Switching device according to one of claims 4 to 7, wherein the first supply line (7) includes a first switching element (10), wherein the first thyristor (5) is connected to the first supply line (7) in such a manner that when the first switching element (10) is in the open state a current can flow across the first thyristor (5).

9. Switching device according to one of claims 4 to 8, wherein the third AC motor line (2) is connected to the first supply line (7) and the second supply line (8) includes a third switching element (12), in particular two opposed thyristors.

## Revendications

1. Procédé pour mettre fin à une opération de freinage d'un moteur ( 1 ) triphasé, l'opération de freinage du moteur ( 1 ) triphasé s'effectuant au moyen d'un appareil ( 18 ) de commutation, l'appareil ( 18 ) de commutation comprenant une première, deuxième et troisième lignes ( 2, 3, 4 ) de moteur triphasé, une première et une troisième lignes ( 7, 9 ) d'alimentation et un premier et un deuxième thyristors ( 5, 6 ), la première, deuxième et troisième lignes ( 2, 3, 4 ) de moteur triphasé étant reliées au moteur ( 1 ) triphasé, le premier thyristor ( 5 ) étant relié à la première ligne ( 7 ) d'alimentation et à la première ligne ( 3 ) de moteur triphasé, le deuxième thyristor ( 6 ) étant relié à la première ligne ( 3 ) de moteur triphasé et à la deuxième ligne ( 4 ) de moteur triphasé et la deuxième ligne ( 4 ) de moteur triphasé étant reliée à la troisième ligne ( 9 ) d'alimentation, la commande du premier et du deuxième thyristors ( 5, 6 ) s'effectuant par une unité de traitement de l'appareil ( 18 ) de commutation l'unité de traitement pendant l'opération de freinage du moteur ( 1 ) triphasé :
- commandant dans un premier stade le premier thyristor ( 5 ) de manière à injecter, par la première et la troisième lignes ( 7, 9 ) d'alimentation, un courant ( 20 ) de freinage dans le moteur ( 1 ) triphasé de manière à créer un couple freinant le moteur ( 1 ) triphasé,
- commandant dans un deuxième stade le deuxième thyristor ( 6 ) de manière à ce que, lors d'une extinction du premier thyristor ( 5 ), le courant ( 20 ) de freinage soit pris en charge par le deuxième thyristor ( 6 ) et de manière à ce que le couple freinant soit maintenu,
- les deux stades sont répétés,
**caractérisé en ce que**
l'unité de traitement arrête précisément à la fin de l'opération de freinage du moteur ( 1 ) triphasé après une dernière commande du premier thyristor ( 5 ), une commande du deuxième thyristor de manière à faire cesser une prise en charge du courant ( 20 ) de freinage par le deuxième thyristor ( 6 ).

2. Procédé suivant la revendication 1, dans lequel la commande du premier et/ou du deuxième thyristor ( 5, 6 ) s'effectue respectivement pendant un créneau temporel réglé à l'avance ou pour un courant réglé à l'avance.

3. Procédé suivant l'une des revendications précédentes, dans lequel le premier et le deuxième stades s'effectuent respectivement dans une période du courant s'appliquant par l'intermédiaire du premier thyristor ( 5 ).

4. Appareil ( 18 ) de commutation pour mettre fin à une opération de freinage d'un moteur ( 1 ) triphasé, l'appareil ( 18 ) de commutation comprenant une première, deuxième et troisième lignes ( 2, 3, 4 ) de moteur triphasé, une première et une troisième lignes ( 7, 9 ) d'alimentation et un premier et un deuxième thyristors ( 5, 6 ), la première, deuxième et troisième lignes ( 2, 3, 4 ) de moteur triphasé étant reliées au moteur ( 1 ) triphasé, le premier thyristor ( 5 ) étant relié à la première ligne ( 7 ) d'alimentation et à la première ligne ( 3 ) de moteur triphasé, le deuxième thyristor ( 6 ) étant relié à la première ligne ( 3 ) de moteur triphasé et à la deuxième ligne ( 4 ) de moteur triphasé et la deuxième ligne ( 4 ) de moteur triphasé étant reliée à la troisième ligne ( 9 ) d'alimentation, la commande du premier et du deuxième thyristors ( 5, 6 ) s'effectuant par une unité de traitement de l'appareil ( 18 ) de commutation, l'unité de traitement étant constituée de manière à ce que, pendant l'opération de freinage du moteur ( 1 ) triphasé, elle commande dans un premier stade, le premier thyristor ( 5 ) de manière à injecter, par la première et la troisième lignes ( 7, 9 ) d'alimentation, un courant ( 20 ) de freinage dans le moteur ( 1 ) triphasé de manière à créer un couple freinant le moteur ( 1 ) triphasé :
- dans un deuxième stade, elle commande le deuxième thyristor ( 6 ) de manière à ce qu'à l'extinction du premier transistor ( 5 ), le courant ( 20 ) de freinage soit pris en charge par le deuxième thyristor ( 6 ) et de manière à ce que le couple freinant soit maintenu,
- elle répète les deux stades,
**caractérisé en ce que** l'unité de traitement est constituée de manière à ce que l'unité de traitement arrête précisément à la fin de l'opération de freinage du moteur ( 1 ) triphasé, après une dernière commande du premier thyristor ( 5 ), une commande du deuxième thyristor de manière à faire cesser une prise en charge du courant ( 20 ) de freinage par le deuxième thyristor ( 6 ).

5. Appareil de commutation suivant la revendication 4, dans lequel le premier et le deuxième thyristors ( 5, 6 ) s'appliquent respectivement par leurs cathodes ou respectivement par leurs anodes à la première ligne ( 3 ) de moteur triphasé.

6. Appareil de commutation suivant les revendications 4 à 5, dans lequel la troisième ligne ( 2 ) de moteur triphasé est relié à la première ligne ( 7 ) d'alimentation.

7. Appareil de commutation suivant l'une des revendications 4 à 6, dans lequel le deuxième thyristor ( 6 ) et/ou le premier thyristor ( 5 ) peut être commandé pendant un créneau temporel réglé à l'avance.

8. Appareil de commutation suivant l'une des revendications 4 à 7, dans lequel la première ligne ( 7 ) d'alimentation comprend un premier élément ( 10 ) de commutation, le premier thyristor ( 5 ) étant relié à la première ligne ( 7 ) d'alimentation de manière à ce que, lorsque le premier élément ( 10 ) de commutation est à l'état ouvert, un courant puisse passer par l'intermédiaire du premier thyristor ( 5 ).

9. Appareil de commutation suivant l'une des revendications 4 à 8, dans lequel la troisième ligne ( 2 ) de moteur triphasé est relié à la première ligne ( 7 ) d'alimentation et la deuxième ligne ( 8 ) d'alimentation comprend un troisième élément ( 12 ) de commutation, notamment deux thyristors montés tête bêche.
